(19)

Europäisches Patentamt

European Patent Office

Office européen des brevets

(11) **EP 4 535 643 A1**

(12) **EUROPEAN PATENT APPLICATION**

published in accordance with Art. 153(4) EPC

(43) Date of publication:
09.04.2025 Bulletin 2025/15

(21) Application number: 23811757.6

(22) Date of filing: 19.05.2023

(51) International Patent Classification (IPC):
$H02P\ 6/18^{(2016.01)}$     $H02P\ 21/18^{(2016.01)}$

(52) Cooperative Patent Classification (CPC):
H02P 6/18; H02P 21/18

(86) International application number:
PCT/JP2023/018820

(87) International publication number:
WO 2023/228885 (30.11.2023 Gazette 2023/48)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 27.05.2022 JP 2022087083
15.02.2023 JP 2023021523

(71) Applicant: Minebea Mitsumi Inc.
Kitasaku-gun, Nagano 3890293 (JP)

(72) Inventors:
• KIMURA, Toshiki
Kitasaku-gun, Nagano 389-0293 (JP)
• YAMASAKI, Reiji
Kitasaku-gun, Nagano 389-0293 (JP)

(74) Representative: Winter, Brandl - Partnerschaft
mbB
Alois-Steinecker-Straße 22
85354 Freising (DE)

(54) **DRIVING CONTROL DEVICE, DRIVING CONTROL SYSTEM, AND STATE ESTIMATION METHOD**

(57) According to the present invention, an estimator: sets, to Ts(=2×Tc=Th), a control period in which a process pertaining to a sensorless vector control is executed; applies a high frequency voltage of a period Th corresponding to a frequency other than an audible range on a γ axis of a γδ quasi-synchronous coordinate system in synchronization with Ts and Tc; detects, in a period Tc, a stator current including a fundamental driving frequency component and a high frequency component; generates at least one of a γ axis element signal cγ or a δ-axis element signal sδ by temporal subtraction between two recent stator current detection values for each period Ts on a γδ quasi-synchronous coordinate system; uses the generated axis element signal and generates, for each period Ts, a positive correlation signal pc having positive correlation with the difference between a rotor phase and a γ-axis phase; signal-processes the positive correlation pc so that the positive correlation pc becomes 0; and generates an estimation value of the phase or speed of a rotor.

FIG.3

(a) CURRENT DETECTION TIMING
(b) HIGH-FREQUENCY VOLTAGE
(c) HIGH-FREQUENCY CURRENT AND SAMPLED VALUE OF SAME
(d) EXAMPLE OF RELATIONSHIP BETWEEN PWM CARRIER WAVE AND CONTROL CYCLE

EP 4 535 643 A1

## Description

### TECHNICAL FIELD

The present disclosure relates to a drive control device, a drive control system, and a state estimation method.

### BACKGROUND ART

Hitherto, as a sensor-less vector control method that does not use a position/speed sensor, a technique of estimating the phase or the speed of a rotor by applying a high-frequency voltage having a frequency higher than a basic drive frequency has been known (for example, see PTL 1).

### CITATION LIST

### PATENT LITERATURE

PTL 1: Japanese Patent No. 6150211
PTL 2: Japanese Patent Application Laid-Open Publication No. 2015-208071
PTL 3: Japanese Patent Application Laid-Open Publication No. 2021-164281

### SUMMARY OF THE INVENTION

### TECHNICAL PROBLEM

However, if the frequency of the applied high-frequency voltage is within the human audible range, noise problems may occur.

The present disclosure provides a drive control device, a drive control system, and a state estimation method that are capable of estimating the phase or the speed of a rotor while suppressing noise within the human audible range.

### SOLUTION TO THE PROBLEM

In one embodiment of the present disclosure, a drive control device for controlling drive of an Alternating-Current (AC) motor, of which a rotor exhibits a salient pole characteristic in response to application of a high-frequency voltage having a frequency higher than a basic drive frequency is provided.

The drive control device includes an estimator configured to estimate a phase or a speed of the rotor.

The estimator has a relationship Ts=2×Tc=Th, where Ts represents a control cycle, which is a cycle for the estimator to perform a process related to sensor-less vector control, Tc represents a current detection cycle, and Th represents a cycle of a high-frequency voltage to be applied.

The estimator is configured to

apply synchronously with the control cycle Ts and the current detection cycle Tc, the high-frequency voltage that has the cycle Th corresponding to a frequency outside an audible range on a $\gamma$-axis of a $\gamma\delta$ semi-synchronous coordinate system composed of the $\gamma$-axis whose phase changes so as to have zero deviation from the phase of the rotor and a $\delta$-axis orthogonal to the $\gamma$-axis,

detect a stator current including a basic drive frequency component and a high-frequency component at the current detection cycle Tc, time-differentiate two most recent detected values of the stator current on the $\gamma\delta$ semi-synchronous coordinate system per the cycle Ts to generate either or both of a $\gamma$-axis component signal $c_\gamma$ and a $\delta$-axis component signal $s_\delta$, and generate a positive correlation signal $p_c$ having a positive correlation with the deviation between the phase of the rotor and the phase of the $\gamma$-axis per the cycle Ts by using the axis component signal that is generated, and

perform signal processing of the positive correlation signal $p_c$ such that the positive correlation signal $p_c$ becomes zero, to generate an estimated value of the phase or the speed of the rotor.

As another embodiment of the present disclosure, a drive control system including the drive control device and the AC motor is provided.

As another embodiment of the present disclosure, a state estimation method for estimating a phase or a speed of a rotor of an Alternating-Current (AC) motor using an estimator provided in a drive control device for controlling drive of the AC motor of which the rotor exhibits a salient pole characteristic in response to application of a high-frequency voltage having a frequency higher than a basic drive frequency is provided.

There is a relationship Ts=2×Tc=Th, where Ts represents a control cycle, which is a cycle for performing a process related to sensor-less vector control, Tc represents a current detection cycle, and Th represents a cycle of a high-frequency voltage to be applied.

The method includes:

applying synchronously with the control cycle Ts and the current detection cycle Tc, the high-frequency voltage that has the cycle Th corresponding to a frequency outside an audible range on a $\gamma$-axis of a $\gamma\delta$ semi-synchronous coordinate system composed of the $\gamma$-axis whose phase changes so as to have zero deviation from the phase of the rotor and a $\delta$-axis orthogonal to the $\gamma$-axis;

detecting a stator current including a basic drive frequency component and a high-frequency component at the current detection cycle Tc, time-differentiating two most recent detected values of the stator current on the $\gamma\delta$ semi-synchronous coordinate system per the cycle Ts to generate either or both of a $\gamma$-

axis component signal $c_\gamma$ and a $\delta$-axis component signal $s_\delta$, and generating a positive correlation signal $p_c$ having a positive correlation with the deviation between the phase of the rotor and the phase of the $\gamma$-axis per the cycle Ts by using the axis component signal that is generated; and

performing signal processing of the positive correlation signal $p_c$ such that the positive correlation signal $p_c$ becomes zero, to generate an estimated value of the phase or the speed of the rotor.

ADVANTAGEOUS EFFECTS OF THE INVENTION

According to an embodiment of the present disclosure, it is possible to estimate the phase or the speed of a rotor while suppressing noise in the human audible range.

BRIEF DESCRIPTION OF THE DRAWINGS

[FIG. 1] FIG. 1 is a diagram illustrating an example of a relationship between three types of coordinate systems and a rotor phase.
[FIG. 2] FIG. 2 is a block diagram illustrating an example of the configuration of a drive control system according to an embodiment.
[FIG. 3] FIG. 3 is a timing chart for illustrating a state estimation method according to an embodiment.
[fig. 4] FIG. 4 is a diagram illustrating an example of a positive correlation characteristic of a positive correlation signal $p_c$.
[FIG. 5] FIG. 5 is a block diagram illustrating an example of a configuration of a phase synchronizer configured to generate a rotor phase estimated value and a rotor speed estimated value by converging a positive correlation signal $p_c$ to zero.
[FIG. 6] FIG. 6 is a block diagram illustrating an example of a configuration of a basic wave current converter.
[FIG. 7] FIG. 7 is a timing chart for illustrating a state estimation method according to an embodiment.

DETAILED DESCRIPTION OF THE INVENTION

Embodiments will be described below.
The technique of the present disclosure is applied to an Alternating-Current (AC) motor, of which a rotor exhibits a salient pole characteristic in response to application of a high-frequency voltage having a frequency higher than the basic drive frequency. Examples of such an AC motor include a permanent magnet synchronous motor, of which a rotor includes a permanent magnet, a winding-type synchronous motor, a synchronous reluctance motor, a hybrid field-magnet-type synchronous motor, of which a rotor includes a permanent magnet and a field-magnet winding, an induction motor, and the like.

An embedded magnet-type permanent magnet synchronous motor, a synchronous reluctance motor, and the like exhibit a salient pole characteristic to the drive voltage or current. These motors also exhibit a salient pole characteristic in response to application of a high-frequency voltage. On the other hand, a surface magnet-type permanent magnet synchronous motor and an induction motor, which do not exhibit a salient pole characteristic to the drive voltage or current, exhibit a salient pole characteristic in response to application of a high-frequency voltage. A hybrid field-magnet-type synchronous motor has the features of both permanent magnet-type and winding-type synchronous motors, and may be able to exhibit a salient pole characteristic in response to application of a high-frequency voltage. In particular, a self-excited hybrid field-magnet synchronous motor has a strong salient pole characteristic.

The present disclosure relates to a state estimation device provided in a drive control device for controlling the drive of the AC motor mentioned above. For example, the present disclosure relates to a digital rotor phase/speed estimation device for estimating the phase (synonymous with position) or the speed of the rotor of the AC motor without using a position/speed sensor, i.e., in a sensor-less manner. The shape of the high-frequency voltage to be applied may be rectangular, and the frequency of the high-frequency voltage to be applied is a marginally high frequency that is approximately the same as the switching frequency of a power inverter (or the carrier frequency in a case of PWM) (i.e., the same, or approximately a fraction of the switching or carrier frequency when the frequency is divided by some number).

In the present specification, the components of each of the stator voltage and the stator current are considered in terms of two categories, i.e., a basic wave component for driving and a high-frequency component. The basic wave component for driving is a component directly related to the rotational speed of the motor (i.e., it is a frequency component that is the level the same as or similar to the speed (electric speed) of the rotor), and the high-frequency component is a component having a frequency (with a known frequency value) that is by far higher than the basic wave component for driving. In particular, in the present disclosure, the high-frequency component means a component having a marginally high frequency that is approximately the same as the switching frequency of a power inverter (or the carrier frequency in a case of PWM) (i.e., the same, or approximately a fraction of the switching or carrier frequency when the frequency is divided by some number).

The rotor phase to be estimated may be set to any desirable position of the rotor, but it is common to select either a negative salient pole phase or a positive salient pole phase of the rotor as the rotor phase. As is well known to those skilled in the art, there is electrically a phase deviation of only $\pm\pi/2$ (rad) between a negative salient pole phase and a positive salient pole phase.

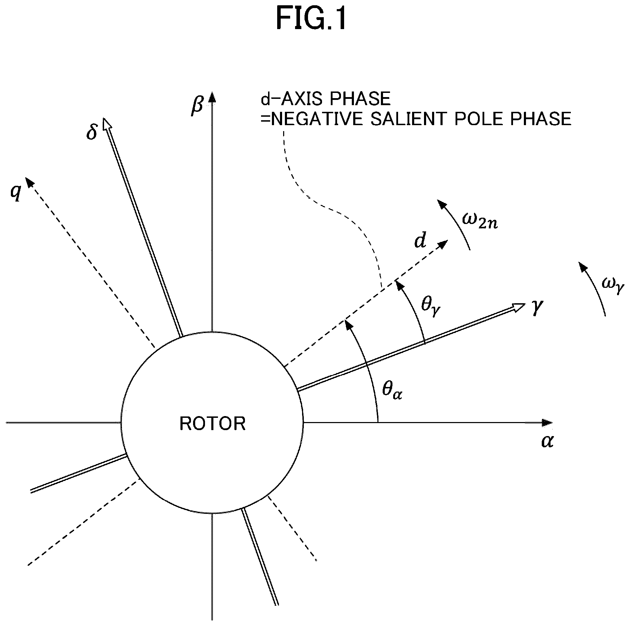

Once either phase is determined, the other phase is automatically determined. In consideration of the foregoing, a negative salient pole phase of the rotor will be defined as the rotor phase in the following description, unless otherwise particularly noted. A two-axial orthogonal coordinate system composed of a d-axis synchronized with the rotor phase without any phase deviation and a q-axis orthogonal to the d-axis will be referred to as a dq-synchronous coordinate system (see FIG. 1).

High-frequency voltage application methods for applying a rectangular high-frequency voltage are more minutely classified in terms of the coordinate system on which the high-frequency voltage is applied. Specifically, high-frequency voltage application methods are minutely classified into a method of applying a high-frequency voltage on an $\alpha\beta$ fixed coordinate system and a method of applying a high-frequency voltage on a $\gamma\delta$ semi-synchronous coordinate system (which is one type of rotational coordinate systems) aiming for convergence to the dq synchronous coordinate system with zero phase difference (see FIG. 1). The high-frequency voltage application method that is the subject of the present disclosure applies a rectangular high-frequency voltage on a $\gamma\delta$ semi-synchronous coordinate system. The high-frequency voltage application method that is the subject of the present disclosure may apply a rectangular high-frequency voltage only on the $\gamma$ axis, that is, does not need to apply a high-frequency voltage on the $\delta$ axis.

The technique of the present disclosure may perform the processing of a stator current including a high-frequency component on the $\gamma\delta$ semi-synchronous coordinate system.

FIG. 1 illustrates a $\gamma\delta$ semi-synchronous coordinate system rotating at a coordinate system speed $\omega_\gamma$ designated by the designer of the control. The $\gamma\delta$ semi-synchronous coordinate system is composed of a $\gamma$ axis whose phase changes so as to have zero deviation from the rotor phase and a $\delta$ axis orthogonal to the $\gamma$ axis. The coordinate system speed $\omega_\gamma$ is one candidate of a rotor speed estimated value. Rotation from the major axis ($\gamma$ axis) to the minor axis ($\delta$ axis) is defined to be in the positive direction. All 2x1 vector signals representing physical quantities of the AC motor shall be defined on this coordinate system, unless otherwise particularly noted.

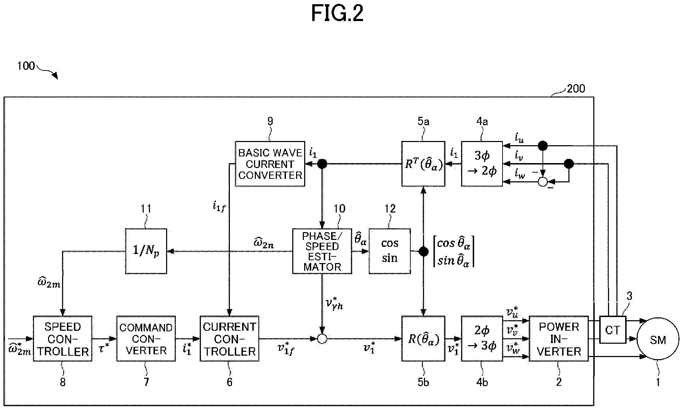

FIG. 2 is a block diagram illustrating an example of a configuration of a drive control system according to an embodiment. A drive control system 100 is a system for controlling the drive of an Alternating-Current (AC) motor 1. The drive control system 100 includes the AC motor 1 and a drive control device 200.

The AC motor 1 is an AC motor, of which a rotor exhibits a salient pole characteristic in response to application of a high-frequency voltage having a frequency higher than the basic drive frequency.

The drive control device 200 is a digital drive control device for controlling the drive of the AC motor 1. The drive control device 200 includes a power inverter 2, a current detector 3, a 3-phase-to-2-phase converter 4a, a 2-phase-to-3-phase converter 4b, vector rotators 5a and 5b, a current controller 6, a command converter 7, a speed controller 8, a basic wave current converter 9, a phase/speed estimator 10, a multiplier 11, and a cosine/sine signal generator 12.

The drive control device 200 includes, for example, a memory and a processor (e.g., a Central Processing Unit (CPU)), and a part or all of the functions of the drive control device 200 are realized by the processor operating in accordance with a program stored in the memory. A part or all of the functions of the drive control device 200 may be realized by a Field Programmable Gate Array (FPGA) or an Application Specific Integrated Circuit (ASIC).

3-phase stator currents $i_u$, $i_v$, and $i_w$ detected by the current detector 3 are converted by the 3-phase-to-2-phase converter 4a into a 2-phase current $i_1$ on the $\alpha\beta$ fixed coordinate system, and then converted by the vector rotator 5a into a 2-phase current $i_1$ on the $\gamma\delta$ semi-synchronous coordinate system aiming for phase synchronization with the rotor phase (which is the same as the phase of the dq synchronous coordinate system) with 0 phase deviation. The basic wave current converter 9 extracts the drive current $i_{1f}$ (which is the basic drive frequency component of the stator current) from the 2-phase current $i_1$ resulting from the conversion, and the extracted drive current $i_{1f}$ (which is the basic drive frequency component of the stator current) is sent to the current controller 6. The current controller 6 generates a 2-phase drive voltage command value $v_{1f}{}^*$ on the $\gamma\delta$ semi-synchronous coordinate system such that a 2-phase drive current on the $\gamma\delta$ semi-synchronous coordinate system follows the current command value of each phase.

A rectangular single-phase high-frequency voltage command value ($\gamma$-axis high-frequency voltage command value $v_{\gamma h}{}^*$) received from the phase/speed estimator 10 is superimposed on the $\gamma$-axis component of the 2-phase drive voltage command value $v_{1f}{}^*$, and the superimposition-synthesized 2-phase voltage command value $v_1{}^*$ (with no change in the $\delta$-axis voltage command, which thus remains the same as the drive voltage command value) is sent to the vector rotator 5b. The vector rotator 5b converts the superimposition-synthesized 2-phase voltage command value $v_1{}^*$ on the $\gamma\delta$ semi-synchronous coordinate system into the 2-phase voltage command value $v_1{}^*$ on the $\alpha\beta$ fixed coordinate system, and sends the 2-phase voltage command value $v_1{}^*$ resulting from the conversion to the 2-phase-to-3-phase converter 4b. The 2-phase-to-3-phase converter 4b converts the 2-phase voltage command value $v_1{}^*$ on the $\alpha\beta$ fixed coordinate system into 3-phase voltage command values $v_u{}^*$, $v_v{}^*$, and $v_w{}^*$, and outputs the 3-phase voltage command values $v_u{}^*$, $v_v{}^*$, and $v_w{}^*$ as ultimate command values to the power inverter 2. The power inverter 2 generates power corresponding to the 3-phase voltage command values $v_u{}^*$, $v_v{}^*$, and $v_w{}^*$, and applies the power to the AC motor 1 to drive the AC motor 1.

The phase/speed estimator 10 receives the stator current that is as an output signal from the vector rotor 5a (i.e., the 2-phase current $i_1$ on the $\gamma\delta$ semi-synchronous coordinate system), as an input, and outputs a rotor phase estimated value $\theta_\alpha\char`\^$, a rotor (electric) speed estimated value $\omega_{2n}\char`\^$, and the rectangular single-phase high-frequency voltage command value ($\gamma$-axis high-frequency voltage command value $v_{\gamma h}*$). The rotor phase estimated value $\theta_\alpha\char`\^$ is converted into a cosine/sine signal by the cosine/sine signal generator 12, and then provided to the vector rotators 5a and 5b that determine the $\gamma\delta$ semi-synchronous coordinate system. This means that the rotor phase estimated value $\theta_\alpha\char`\^$ is determined as the phase of the $\gamma\delta$ semi-synchronous coordinate system (which is equivalent to the phase of the $\gamma$-axis).

As is well known to those skilled in the art, a 2-phase current command value $i_1*$ on the $\gamma\delta$ semi-synchronous coordinate system is obtained by conversion of a torque command value $\tau*$ through the command converter 7. The rotor speed estimated value $\omega_{2n}\char`\^$

(rotor electric speed estimated value), which is one of the output signals from the phase/speed estimator 10, is converted into a machine speed estimated value $\omega_{2m}\char`\^$ by being multiplied by the reciprocal of a polar logarithm $N_p$, which is a constant value, through the multiplier 11, and the machine speed estimated value $\omega_{2m}\char`\^$ resulting from the conversion is sent to the speed controller 8. Since FIG. 2 illustrates an example in which the speed control system is configured, the torque command value $\tau*$ is obtained as an output of the speed controller 8. As is well known to those skilled in the art, the speed controller 8 is unnecessary when the control purpose is torque control and is not to configure a speed control system. In such a case, the torque command value $\tau*$ is supplied from the outside.

The phase/speed estimator 10 is an example of an estimator configured to estimate the phase or the speed of the rotor of the AC motor 1. The phase/speed estimator 10 is a digital rotor phase/speed estimator (state estimator) for estimating the phase or the speed of the rotor by applying a high-frequency voltage having a frequency higher than the basic drive frequency.

Next, an example of a state estimation method performed by the phase/speed estimator 10 will be described.

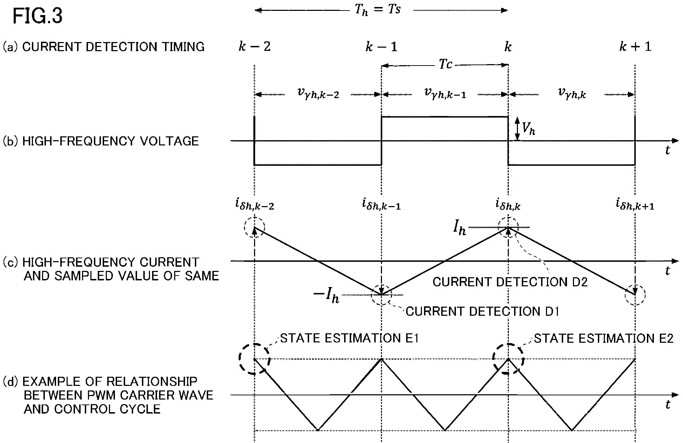

FIG. 3 is a timing chart for illustrating the state estimation method according to one embodiment. The control cycle, which is a cycle at which a process related to the sensor-less vector control is performed, is defined as Ts, a current detection cycle is defined as Tc, and the cycle of the high-frequency voltage to be applied is defined as Th. The subscript letter k of a current i denotes a temporally-discrete detection timing at t=kTc, and the subscript letter k-1 of a voltage v means that the voltage is applied during a time t from (k-1)Tc to kTc.

FIG. 3 illustrates an example of the timings at which the waveform of the rectangular high-frequency voltage is switched and the temporally-discrete detection timings (sampling timings) to detect the current. In FIG. 3, (a) indicates the temporally-discrete detection timings to detect the stator current at the cycle Tc, (b) indicates the rectangular high-frequency voltage having the cycle Th, and (c) indicates the high-frequency current corresponding to the applied high-frequency voltage and its temporally-discrete detected values (explicitly indicated by circles). (d) is an example of the relationship between a PWM carrier wave for the power inverter used for the application of the high-frequency voltage and the control cycle. The PWM cycle is Tc. The relationship among the control cycle Ts, which is the cycle at which the process related to the sensor-less vector control is performed, the current detection cycle Tc, and the cycle Th of the high-frequency voltage to be applied is Ts=2×Tc=Th. That is, the phase/speed estimator 10 generates a rotor phase estimated value and a rotor speed estimated value at the cycle Ts=2×Tc (see state estimations E1 and E2 in FIG. 3). That is, the phase/speed estimator 10 performs the application of the high-frequency voltage and the detection of the current per the cycle Tc, while thinning out the process for estimating the phase or the speed of the rotor by one cycle. In order for the drive control device employing a power inverter using a PWM carrier wave to accurately detect the stator current temporally discretely, the detection timings must be at a peak or a bottom of the PWM carrier wave, or both. As illustrated in FIG. 3, the temporally-discrete detection timings to detect the current are also synchronized with the PWM carrier wave.

The phase/speed estimator 10 superimposition-applies the high-frequency voltage for phase estimation to the drive voltage for the AC motor 1. When the high-frequency voltage for phase estimation is superimposition-applied to the drive voltage for the AC motor 1, the voltage $v_1$, the current $i_1$, and the interlinkage magnetic flux $\varphi_1$ of the stator can each be expressed as a composite vector of the basic drive frequency component and the high-frequency component.

The frequency $\omega_h$ of the high-frequency voltage that is superimposition-applied for phase estimation shall be high enough to satisfy the relationship "$|\omega_r/\omega_h|\ll1$". The frequency ratio is, for example, 0.01 or less. $\omega_r$ represents the drive frequency for the AC motor 1.

In a situation in which the relationship "$|\omega_r/\omega_h|\ll1$" is satisfied, the phase/speed estimator 10 applies a rectangular high-frequency voltage $v_{\gamma h}$ having an amplitude $V_h$ on the $\gamma$-axis at the cycle Th corresponding to a frequency outside the human audible range. The application of the high-frequency voltage $v_{\gamma h}$ generates a high-frequency current.

It is commonly said that the human audible range is from 20 Hz or higher and lower than 20 kHz. However, since some people cannot hear high-frequency sounds, it may be defined as "20 Hz or higher and 19 kHz or lower" or "20 Hz or higher and 16 kHz or lower".

The upper limit of the cycle Th of the rectangular high-frequency voltage $v_{\gamma h}$ is approximately 1/20 the electric time constant (L/R) of the AC motor 1. The upper limit of the control cycle Ts is automatically determined based on the upper limit of the cycle Th. L represents the winding inductance of the AC motor 1, and R represents the winding resistance of the AC motor 1.

Then, the phase/speed estimator 10 applies the rectangular high-frequency voltage $v_{\gamma h}$ synchronously with the temporally-discrete detection timing (sampling timing) to detect the stator current. That is, the waveform switching timing of the rectangular high-frequency voltage $v_{\gamma h}$ shall coincide with one of the temporally-discrete detection timings. In this case, the high-frequency current between temporally-discrete detection timings changes linearly. Therefore, in this case, the differential value of the high-frequency current is the exact alternative of the time-differential value of the sampled values.

The phase/speed estimator 10 detects the stator current including the basic drive frequency component and the high-frequency component temporally discretely at the cycle Tc. The phase/speed estimator 10 generates either or both of a $\gamma$-axis component signal $c_\gamma$ and a $\delta$-axis component signal $s_\delta$ on the $\gamma\delta$ semi-synchronous coordinate system by time-differentiating two most recent stator current detected values per the cycle Ts. For example, the $\gamma$-axis component signal $c_\gamma$ and the $\delta$-axis component signal $s_\delta$ are expressed as follows.

$$c_\gamma = i_{\gamma,k} - i_{\gamma,k-1}$$

$$s_\delta = i_{\delta,k} - i_{\delta,k-1}$$

$i_\gamma$ represents the stator current on the $\gamma$-axis, and $i_\delta$ represents the stator current on the $\delta$-axis.

The phase/speed estimator 10 generates a positive correlation signal $p_c$ having a positive correlation with the phase deviation $\theta_\gamma$ between the rotor (d-axis) and the $\gamma$-axis by using either or both of the $\gamma$-axis component signal $c_\gamma$ and the $\delta$-axis component signal $s_\delta$ per the cycle Ts. For example, the positive correlation signal $p_c$ is expressed as follows.

$$p_c = s_\delta / c_\gamma = (i_{\delta,k} - i_{\delta,k-1}) / (i_{\gamma,k} - i_{\gamma,k-1})$$

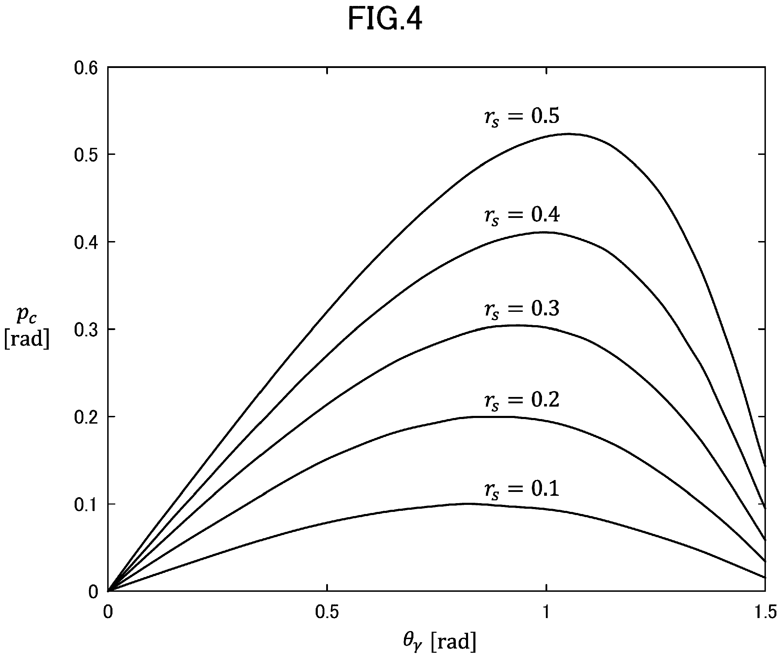

FIG. 4 is a diagram illustrating an example of the positive correlation characteristic of the positive correlation signal $p_c$. The positive correlation signal $p_c$ exhibits a positive correlation characteristic with respect to various salient pole ratios $r_s$. The salient pole ratio $r_s$ is expressed as follows.

$$r_s = (L_q - L_d) / (L_q + L_d)$$

$L_d$ represents the d-axis inductance and $L_q$ is the q-axis inductance.

From FIG. 4, in a case of a large salient pole ratio $r_s$ of 0.5, the positive correlation is secured in a region of the phase deviation $\theta_\gamma$ that is within 1.1 [rad]. In a case of a small salient pole ratio $r_s$ of 0.1, the positive correlation is secured in a region of the phase deviation $\theta_\gamma$ that is within approximately 0.8 [rad]. As can be understood from the FIG. 4, in a region of the phase deviation $\theta_\gamma$ that is within 0.5 [rad], the following relationships are satisfied.

$$p_c \approx K_\theta \theta_\gamma$$

$$\theta_\gamma \le 0.5$$

$$K_\theta = (L_q - L_d) / L_q$$

As can be understood from the positive correlation characteristic of FIG. 4, the positive correlation signal in the positive correlation region is an effective phase deviation $\theta_\gamma$, which deserves being referred to as a phase deviation equivalent value (see FIG. 1). Naturally, the unit of the positive correlation signal is rad, which is the same as the unit of the phase deviation.

Next, the phase/speed estimator 10 generates an estimated value of the phase of the $\gamma\delta$ semi-synchronous coordinate system by performing signalprocessing of the positive correlation signal $p_c$ such that the positive correlation signal $p_c$ becomes 0. As can be understood from the example of FIG. 4, driving the positive correlation signal in the positive correlation region to 0 means driving the phase deviation $\theta_\gamma$ to 0, and consequently, converging the $\gamma\delta$ semi-synchronous coordinate system to the dq synchronous coordinate system (see FIG. 1). Since the phase of the $\gamma\delta$ semi-synchronous coordinate system (or the $\gamma$ axis) and its differential equivalent value correspond to estimated values of the phase and the speed of the rotor of an AC motor, a rotor phase estimated value and a rotor speed estimated value can be obtained from the phase of the $\gamma\delta$ semi-synchronous coordinate system (or the phase of the $\gamma$ axis).

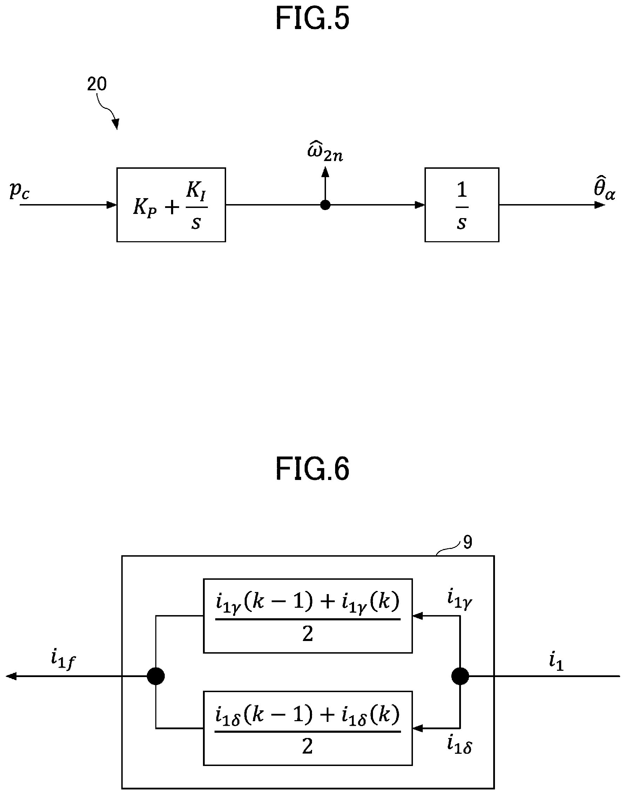

FIG. 5 is a block diagram illustrating an example of a configuration of a phase synchronizer configured to generate a rotor phase estimated value and a rotor speed estimated value by converging the positive correlation signal $p_c$ to zero. The phase/speed estimator 10 includes a phase synchronizer 20. The phase synchronizer 20 is configured based on the digital generalized integral type PLL method. $K_p$ represents a proportionality constant, $K_I$ represents an integration constant, and s represents a Laplace operator.

The phase synchronizer 20 receives the positive correlation signal $p_c$ as an input signal, and outputs the phase $\theta_\alpha^\wedge$ of the $\gamma\delta$ semi-synchronous coordinate system (in this example, the phase of the $\gamma\delta$ semi-synchronous coordinate system is equivalent to the rotor phase estimated value), and the speed $\omega_\gamma$ of the $\gamma\delta$ semi-synchronous coordinate system. Effectively, the coordinate system speed $\omega_\gamma$ is the same as the rotor (electric)

speed estimated value $\omega_{2n}$^.

Therefore, by using the positive correlation signal $p_c$, the phase/speed estimator 10 of the present embodiment can obtain these estimated values with a very small amount of computation.

Further, the phase/speed estimator 10 of the present embodiment applies a rectangular high-frequency voltage $v_{\gamma h}$ having an amplitude $V_h$ on the $\gamma$ axis at the cycle Th corresponding to a frequency outside the human audible range. Thus, since the high-frequency voltage $v_{\gamma h}$ is applied at a frequency outside the audible range, it is possible to estimate the phase or the speed of the rotor by suppressing noise (a sound in the human audible range) that may be generated due to the application of the high-frequency voltage $v_{\gamma h}$.

For example, according to PTL 1, the frequency of the high-frequency voltage to be applied is set to be half the PWM frequency and the control frequency (i.e., the cycle of the high-frequency voltage to be applied is set to be twice the PWM cycle and the control cycle). In this case, the upper limit of the PWM frequency and the control frequency, of both of which the control frequency is more of a hindrance, is restricted mainly due to the computing capability (processing speed) of the microcomputer, and the upper limit of these frequencies is currently approximately 20 kHz when considering a low-cost microcomputer to which sensor-less control is applied. This being the case, the frequency of the high-frequency voltage to be applied is approximately 10 kHz, which is included in the human audible range. As a result, high-frequency noise (sound in the human audible range) that may be generated due to the application of the high-frequency voltage occurs, which may cause a discomfort to the user.

In contrast, in the present embodiment, since the high-frequency voltage $v_{\gamma h}$ is applied at a frequency outside the audible range, noise (sound in the human audible range) that may be generated due to application of the high-frequency voltage $v_{\gamma h}$ can be suppressed. For example, in FIG. 3, the PWM frequency and the current detection frequency are set to 40 kHz (PWM cycle = current detection cycle Tc = 25 $\mu$s), and the high-frequency voltage frequency and the control frequency are set to 20 kHz, which is half that frequency (the cycle Th of the high-frequency voltage = control cycle Ts = 50 $\mu$s). Therefore, since the frequency of 20 kHz, which is the frequency of the high-frequency voltage $v_{\gamma h}$, is outside the human audible range, noise (sound in the human audible range) that may be generated due to application of the high-frequency voltage $v_{\gamma h}$ can be suppressed.

FIG. 3 (c) illustrates only the high-frequency current applied, but the detected stator current includes not only the current corresponding to the high-frequency component but also the current corresponding to the basic wave component for driving. The currents actually detected are expressed as follows.

Current detection D1: $I_{all,\ k-1} = I_c - I_h$

Current detection D2: $I_{all,\ k} = I_c + I_h$

$I_c$ represents the current corresponding to the basic wave component for driving (basic wave current), and $I_{all}$ represents the stator current including the basic drive frequency component and the high-frequency component. When the aforementioned relationship "$|\omega_r/\omega_h| \ll 1$" is satisfied, it can be regarded that $I_c$ does not substantially change between the timing of the current detection D1 and the timing of the current detection D2.

That is, the basic wave current converter 9 (see FIG. 2) can extract the drive current $i_{1f}$ ($=I_c$) from a 2-phase current $i_1$ resulting from conversion, by calculating $I_c$ based on the following relational equation.

$$( I_{all,k-1} + I_{all,\ k} ) / 2 = I_c$$

That is, since the drive current $i_{1f}$ ($=I_c$) can be extracted by such simple processing, the load on the microcomputer can be suppressed.

FIG. 6 is a block diagram illustrating an example of a configuration of the basic wave current converter. A 2-phase current $i_1$ resulting from conversion includes a $\gamma$-axis current $i_{1\gamma}$ and a $\delta$-axis current $i_{1\delta}$. The basic wave current converter 9 can extract the drive current $i_{1f}$ by applying the above relational equation to each of the $\gamma$-axis current $i_{1\gamma}$ and $\delta$-axis current $i_{1\delta}$.

Although the embodiments have been described above, the technology of the present disclosure is not limited to the above embodiments. Various modifications and improvements such as combination or replacement with some or all of the other embodiments are applicable.

For example, the current detector 3 is not limited to a sensor such as a Current Transformer (CT) for detecting a current flowing in the AC motor 1, but may be one that detects a one-shunt current flowing in the direct-current side of the power inverter 2. The one-shunt current detection method is a method for detecting the phase current of each phase for controlling the motor, by using one shunt resistor connected to the DC bus line of the power inverter (see, e.g., PTLs 2 and 3).

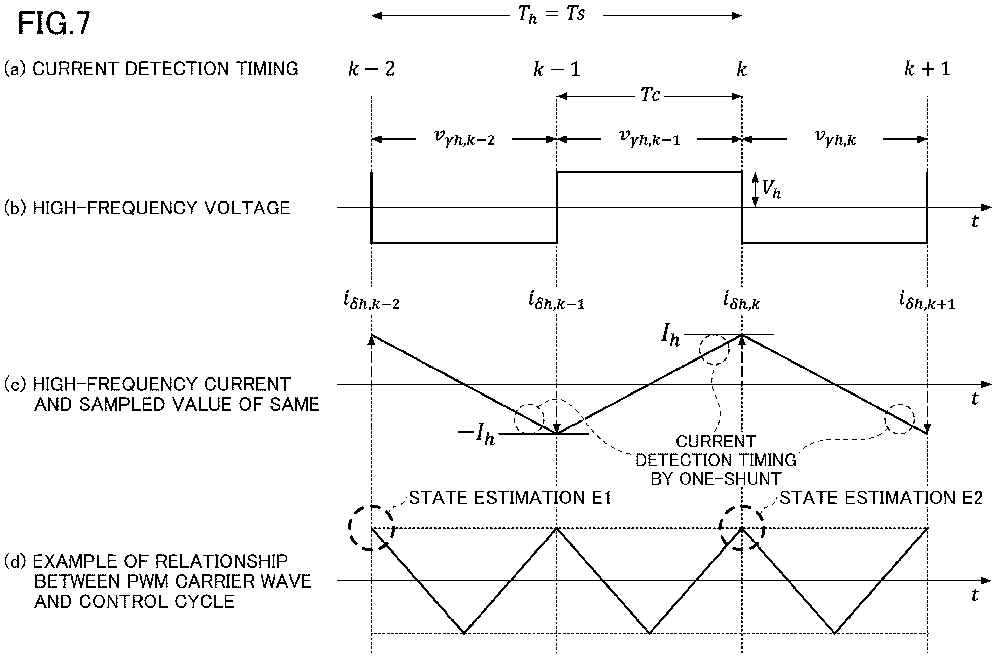

FIG. 7 is a timing chart for illustrating a state estimation method according to an embodiment in a case of controlling the drive of the AC motor by the one-shunt current detection method. In the case of the one-shunt current detection method, the high-frequency voltage switching timings and the current detection timings do not necessarily coincide. Thus, based on that the temporally-discrete detection cycle to detect the current is synchronous with the cycle of the PWM carrier also in the one-shunt current detection method, application of a rectangular high-frequency voltage by the phase/speed estimator shall be performed at a timing synchronized with the temporally-discrete detection cycle to detect the stator current. This causes application of the rectangular high-frequency voltage $v_{\gamma h}$ by the phase/speed estimator 10 to be performed synchronously with the temporally-discrete detection timing to detect the stator current.

This international application claims priority based on Japanese Patent Application No. 2022-087083 filed May 27, 2022 and Japanese Patent Application No. 2023-021523 filed February 15, 2023, and the entire contents of both of the applications are incorporated herein by reference.

REFERENCE SIGNS LIST

1 AC motor
2 power inverter
3 current detector
4a 3-phase-to-2-phase converter
4b 2-phase-to-3-phase converter
5a vector rotator
5b vector rotator
6 current controller
7 command converter
8 speed controller
9 basic wave current converter
10 phase/speed estimator
11 multiplier
12 cosine/sine signal generator
20 phase synchronizer
100 drive control system
200 drive control device

**Claims**

1. A drive control device for controlling drive of an Alternating-Current (AC) motor, of which a rotor exhibits a salient pole characteristic in response to application of a high-frequency voltage having a frequency higher than a basic drive frequency, the drive control device comprising:

   an estimator configured to estimate a phase or a speed of the rotor,
   wherein the estimator has a relationship $Ts=2\times Tc=Th$, where Ts represents a control cycle, which is a cycle for the estimator to perform a process related to sensor-less vector control, Tc represents a current detection cycle, and Th represents a cycle of a high-frequency voltage to be applied, and
   the estimator is configured to
   apply synchronously with the control cycle Ts and the current detection cycle Tc, the high-frequency voltage that has the cycle Th corresponding to a frequency outside an audible range on a $\gamma$-axis of a $\gamma\delta$ semi-synchronous coordinate system composed of the $\gamma$-axis whose phase changes so as to have zero deviation from the phase of the rotor and a $\delta$-axis orthogonal to the $\gamma$-axis,
detect a stator current including a basic drive frequency component and a high-frequency component at the current detection cycle Tc, time-differentiate two most recent detected values of the stator current on the $\gamma\delta$ semi-synchronous coordinate system per the cycle Ts to generate either or both of a $\gamma$-axis component signal $c_\gamma$ and a $\delta$-axis component signal $s_\delta$, and generate a positive correlation signal $p_c$ having a positive correlation with the deviation between the phase of the rotor and the phase of the $\gamma$-axis per the cycle Ts by using the axis component signal that is generated, and
perform signal processing of the positive correlation signal $p_c$ such that the positive correlation signal $p_c$ becomes zero, to generate an estimated value of the phase or the speed of the rotor.

2. A drive control system, comprising:

   the drive control device of claim 1; and
   the AC motor.

3. A state estimation method for estimating a phase or a speed of a rotor of an Alternating-Current (AC) motor using an estimator provided in a drive control device for controlling drive of the AC motor of which the rotor exhibits a salient pole characteristic in response to application of a high-frequency voltage having a frequency higher than a basic drive frequency,

   wherein there is a relationship $Ts=2\times Tc=Th$, where when Ts represents a control cycle, which is a cycle for performing a process related to sensor-less vector control, Tc is a current detection cycle, and Th is a cycle of a high-frequency voltage to be applied, and
   the state estimation method comprises:

   applying synchronously with the control cycle Ts and the current detection cycle Tc, the high-frequency voltage that has the cycle Th corresponding to a frequency outside an audible range on a $\gamma$-axis of a $\gamma\delta$ semi-synchronous coordinate system composed of the $\gamma$-axis whose phase changes so as to have zero deviation from the phase of the rotor and a $\delta$-axis orthogonal to the $\gamma$-axis;
   detecting a stator current including a basic drive frequency component and a high-frequency component at the current detection cycle Tc, time-differentiating two most recent detected values of the stator current on the $\gamma\delta$ semi-synchronous coordinate system per the cycle Ts to generate either or

**EP 4 535 643 A1**

both of a $\gamma$-axis component signal $c_\gamma$ and a $\delta$-axis component signal $s_\delta$, and generating a positive correlation signal $p_c$ having a positive correlation with the deviation between the phase of the rotor and the phase of the $\gamma$-axis per the cycle Ts by using the axis component signal that is generated, and performing signal processing of the positive correlation signal $p_c$ such that the positive correlation signal $p_c$ becomes zero, to generate an estimated value of the phase or the speed of the rotor.

# FIG.1

d-AXIS PHASE
=NEGATIVE SALIENT POLE PHASE

# FIG.2

# FIG.3

$$\longleftarrow T_h = Ts \longrightarrow$$

(a) CURRENT DETECTION TIMING $\quad k-2 \qquad\qquad k-1 \qquad\qquad k \qquad\qquad k+1$

$$\longleftarrow Tc \longrightarrow$$

$$\longleftarrow v_{\gamma h,k-2} \longrightarrow \longleftarrow v_{\gamma h,k-1} \longrightarrow \longleftarrow v_{\gamma h,k} \longrightarrow$$

(b) HIGH-FREQUENCY VOLTAGE $\qquad\qquad\qquad\qquad\qquad\qquad\qquad\qquad \updownarrow V_h \qquad\qquad t$

$$i_{\delta h,k-2} \qquad\qquad i_{\delta h,k-1} \qquad\qquad i_{\delta h,k} \qquad\qquad i_{\delta h,k+1}$$

$$I_h$$

(c) HIGH-FREQUENCY CURRENT
  AND SAMPLED VALUE OF SAME $\qquad\qquad\qquad\qquad\qquad\qquad\qquad\qquad t$

CURRENT DETECTION D2

$$-I_h$$

CURRENT DETECTION D1

STATE ESTIMATION E1 $\qquad\qquad\qquad\qquad$ STATE ESTIMATION E2

(d) EXAMPLE OF RELATIONSHIP
  BETWEEN PWM CARRIER WAVE
  AND CONTROL CYCLE $\qquad\qquad\qquad\qquad\qquad\qquad\qquad\qquad t$

FIG.4

# FIG.5

# FIG.6

# FIG.7

(a) CURRENT DETECTION TIMING

$k-2$  $k-1$  $k$  $k+1$

$T_h = Ts$

$Tc$

$v_{\gamma h, k-2}$  $v_{\gamma h, k-1}$  $v_{\gamma h, k}$

(b) HIGH-FREQUENCY VOLTAGE

$V_h$

$t$

(c) HIGH-FREQUENCY CURRENT AND SAMPLED VALUE OF SAME

$i_{\delta h, k-2}$  $i_{\delta h, k-1}$  $i_{\delta h, k}$  $i_{\delta h, k+1}$

$I_h$

$-I_h$

$t$

CURRENT DETECTION TIMING BY ONE-SHUNT

STATE ESTIMATION E1

STATE ESTIMATION E2

(d) EXAMPLE OF RELATIONSHIP BETWEEN PWM CARRIER WAVE AND CONTROL CYCLE

$t$

EP 4 535 643 A1

## INTERNATIONAL SEARCH REPORT

| International application No. |
| --- |
| **PCT/JP2023/018820** |

| A. | CLASSIFICATION OF SUBJECT MATTER |
| --- | --- |

*H02P 6/18*(2016.01)i; *H02P 21/18*(2016.01)i
FI:   H02P6/18; H02P21/18

According to International Patent Classification (IPC) or to both national classification and IPC

| B. | FIELDS SEARCHED |
| --- | --- |

Minimum documentation searched (classification system followed by classification symbols)

H02P6/18; H02P21/18

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | JP 2015-39278 A (C & S KOKUSAI KENKYUSHO KK) 26 February 2015 (2015-02-26) paragraphs [0001], [0021]-[0047], [0049]-[0056], [0062], fig. 1-2, 4-6 | 1-3 |
| Y | JP 2016-21800 A (RICOH CO LTD) 04 February 2016 (2016-02-04) paragraphs [0071], [0087] | 1-3 |
| A | JP 2015-37376 A (C & S KOKUSAI KENKYUSHO KK) 23 February 2015 (2015-02-23) paragraphs [0022]-[0056], fig. 1-8 | 1-3 |

☐ Further documents are listed in the continuation of Box C.      ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **19 June 2023** | **11 July 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
### Information on patent family members

International application No.

**PCT/JP2023/018820**

| Patent document cited in search report | | | Publication date (day/month/year) | Patent family member(s) | Publication date (day/month/year) |
|---|---|---|---|---|---|
| JP | 2015-39278 | A | 26 February 2015 | (Family: none) | |
| JP | 2016-21800 | A | 04 February 2016 | US 2016/0011009 A1 paragraphs [0092], [0108] CN 105305915 A | |
| JP | 2015-37376 | A | 23 February 2015 | (Family: none) | |

Form PCT/ISA/210 (patent family annex) (January 2015)

**REFERENCES CITED IN THE DESCRIPTION**

**Patent documents cited in the description**

- JP 6150211 B
- JP 2015208071 A
- JP 2021164281 A

- JP 2022087083 A
- JP 2023021523 A